Europäisches Patentamt

European Patent Office

Office européen des brevets

(19)

(11) **EP 0 523 583 B2**

(12) **NEUE EUROPÄISCHE PATENTSCHRIFT**

| | |
|---|---|
| (45) Veröffentlichungstag und Bekanntmachung des Hinweises auf die Entscheidung über den Einspruch:<br>**14.01.2004 Patentblatt 2004/03** | (51) Int Cl.⁷: **G01N 31/16** |

(45) Hinweis auf die Patenterteilung:
**10.09.1997 Patentblatt 1997/37**

(21) Anmeldenummer: **92111861.8**

(22) Anmeldetag: **11.07.1992**

(54) **Katholyt für die coulometrische Wasserbestimmung nach Karl Fischer**

Catholyte for the coulometric Karl Fischer titration of water

Catholyte pour la détermination coulométrique de l'eau par la méthode de Karl Fischer

(84) Benannte Vertragsstaaten:
**AT BE CH DE DK ES FR GB GR IT LI NL PT SE**

(30) Priorität: **19.07.1991 DE 4123976**

(43) Veröffentlichungstag der Anmeldung:
**20.01.1993 Patentblatt 1993/03**

(73) Patentinhaber: **RIEDEL-DE HAEN AKTIENGESELLSCHAFT**
**D-30926 Seelze (DE)**

(72) Erfinder: **Scholz, Eugen, Dr.**
**W-3008 Garbsen (DE)**

(74) Vertreter:
**Geissler, Bernhard, Dr. jur., Dipl.-Phys. et al**
**Patent- und Rechtsanwälte**
**Bardehle . Pagenberg . Dost .**
**Altenburg . Geissler**
**Postfach 86 06 20**
**81633 München (DE)**

(56) Entgegenhaltungen:
| | |
|---|---|
| **EP-A- 0 127 740** | **EP-A- 0 384 195** |
| **EP-B- 0 484 622** | **DE-A- 3 407 014** |
| **FR-A- 1 074 686** | |

- **Chimie Magazine no 76 August/september 1989 Seiten 123-127**
- **Eugen Scholz:," Karl Fischer Titration Methoden zur Wasserbrstimmung" Springer Verlag 1984 Seiten 14-27**

EP 0 523 583 B2

**Beschreibung**

Die vorliegende Erfindung betrifft einen Katholyter für die coulometrische Wasserbestimmung nach Karl Fischer, der durch einen Gehalt eines Salzes einer organischen Stickstoffbase gekennzeichnet ist.

Ein Karl-Fischer-Reagenz für die volumetrische Titration enthält z.B. als reaktive Bestandteile Methanol, Schwefeldioxid, Pyridin (Py) und lod. So beschreibt die EP-A- 0 384 195 ein Reagenz für die coulometrische Wasserbestimmung in einer diaphragmalosen Zelle, bestehend aus einem alkoholischen Lösungsmittel oder Lösungsmittelgemisch, in dem Imidazol und/oder ein Imidazolderivat und/oder Diethanolamin und/oder Triethanolamin und Schwefeldioxid und ein Iodid oder mehrere Iodide und ggf. ein Leitsalz oder mehrere Leitsalze gelöst sind, sowie ein Verfahren zur coulometrischen Wasserbestimmung nach der Karl-Fischer-Reaktion unter Verwendung des dort beanspruchten Reagenzes

Die EP-A-0 086 994 beschreibt ebenfalls ein Karl-Fischer-Reagenz und ein Verfahren zur Bestimmung von Wasser mit Hilfe dieses Reagenzes, wobei das dort beanspruchte Karl-Fischer-Reagenz ein Salz, Schwefeldioxid und lod enthält, wobei das Salz als Verbindung einer organischen Base mit einer schwachen organischen Säure vorliegt Der Wasserbestimmung liegt dann die sogenannte Karl-Fischer-Reaktion zugrunde.

$$CH_3OH + SO_2 + Py \rightarrow (PyH) SO_3CH_3$$

$$H_2O + I_2 + (PyH) SO_3CH_3 + 2Py \rightarrow$$

$$(PyH) SO_4CH_3 + 2(PyH) \qquad\qquad I$$

Dabei wird nach dem ersten Reaktionsschritt zunächst ein Salz der methylschwefligen Säure gebildet, das dann nach dem zweiten Reaktionsschritt unter Verbrauch einer aquivalenten Wassermenge durch lod oxidiert wird.

Die EP-B 0484622 beruht auf der japanischen Prioritätsanmeldung JP 300859/90 vom 6. November 1990. Die diesem Patent zugrundeliegende europäische Patentanmeldung wurde am 13. Mai 1992 veröffentlicht und beschreibt ebenfalls ein Karl-Fischer Reagenz und ein Verfahren zur Bestimmung von Wasser mit Hilfe dieses Reagenzes. Die Elektrolytlösung umfasst eine Dipyridylverbindung, einen Aminoalkohol, Jodidionen und Schwefeldioxid. Diese Elektrolytlösung kann sowohl als Anolyt als auch als Katholyt verwendet werden. Wird sie als Anolyt verwendet, kann sie entweder mit herkömmlichen Katholyten kombiniert werden, oder aus ökologischen Gründen mit einem Katholyten, der eine Lösung eines anorganischen oder organischen Salzes in einem Alkohol oder einen alkylenischen Glykolmonoalkylether umfasst.

Die Karl-Fischer-Titration kann in Form einer cou-Iometrischen Bestimmung in einer speziell konstruierten Zelle ausgeführt werden. Darin ist ein kleinerer Kathodenraum (üblicherweise etwa 5 ml) in einen größeren Anodenraum (üblicherweise etwa 100 ml) eingefügt und von diesem durch ein Diaphragma abgetrennt (siehe z 8. E Scholz. Karl-Fischer-Titration, Springer-Verlag 1984, S 19-20).

Als Reagenzlösungen werden häufig "verbrauchte" Karl-Fischer-Lösungen benutzt. d.h. Karl-Fischer-Lösungen, in denen das lod bereits zu Iodid reduziert wurde Das für die Wasserbestimmung erforderliche lod wird durch anodische Oxidation des Iodids erzeugt. Aus dem Stromverbrauch für diese Oxidationsreaktion kann dann der Wassergehalt errechnet werden, d.h. die Anodenreaktion muß mit 100 %iger Stromausbeute ablaufen

Die Reagenzlösung wird sowohl für den Anodenraum, als auch für den Kathodenraum verwendet, oft jedoch vielfach modifiziert etwa durch Zusatz anderer Lö-sungsmittel Beipielsweise wird im Kathodenraum häufig Tetrachlorkohlerstoff verwendet.

Nachteilig an den genannten Reagenzlösungen ist, daß, wenn Strom fließt, das Schwefeldioxid (eventuell in gebundener Form als Methylsulfit) kathodisch zu nieo deren Schwefefverbindungen reduziert wird. Diese Verbindungen wandern unter dem Einfluß des elektrischen Feldes durch das Diaphragma in den Anodenraum, werden dort durch lod oxidiert und täuschen so Wassergehalte vor (Analytical Sciences, April 1991, Vol. 7, S. 299-302). Die gefundenen Wassergehalte sind also stets zu hoch. Der Fehler ist abhängig von der Menge des analysierten Wassers, denn die Konzentration der oxidierbaren Anteile steigt erst an und fällt dann wieder ab Die Bildung der reduzierbaren Anteile kann durch andere Substanzen beeinflußt werden. Sie nimmt beispielsweise stark zu, wenn Guanidin anwesend ist (DE-OS 34 07 014). Das bereits obengenannte Tetrachlorkohlenstoff verringert zwar die Bildung oxidierbarer Anteile findet aber als halogenierter Kohlenwasserstoff immer weniger Akzeptanz.

Aufgabe vorliegender Erfindung ist es, einen Katholyten für die coulometrische Wasserbestimmung nach Karl Fischer aufzufinden, der eine größere Meßgenauigkeit als die bisher bekannten Katholyten aufweist und dabei ohne halogenierte Kohlenwasserstoffe auskomm.

Die vorliegende Erfindung betrifft für die Vertragsstaaten AT, BE, CH, DK, GR, IT, LI, NL, PT, SE, und ES einen Katholyten für die coulometrische Wasserbestimmung nach Karl Fischer dadurch gekennzeichnet, daß er aus einer Losung eines oder mehrerer Salze aus organischer Stickstoffbase und Säure in einem halogenfreien Lösungsmittel besteht, so daß, wenn Strom fließt, Kein Schwefeldioxid aus dem Katholyten zu niederen Schwefelverbindungen reduziert wird.

Geeignete organische Stickstoffbasen sind beispielsweise primäre sekundäre oder tertiäre aliphatische Amine mit 1 bis 12 Kohlenstoffatomen pro Alkylgruppe. wobei die Alkylgruppen auch durch beispielsweise eine Hydroxy-Gruppe substituiert sein können, primare sekundare oder tertiäre cycloaliphatische Amine mit 3 bis 8 Kohlenstoffatomen pro Cycloalkylgruppe,

Alkylendiamine mit 1 bis 8 Kohlenstoffatomen cyclische Amine mit 3 bis 8 Ringgliedern; oder aromatische Amine mit 5 oder 6 Ringgliedern

Bevorzugte organische Stickstoffbasen sind beispielsweise Methylamin, Diethylamin, Propylamin, Octylamin, Trimethylamin, Dimethyldodecylamin, Cyclohexylamin, Di-Cyclohexylamin, Aminoethanol, Diethanolamin, Triethanolamin, N,N-Dibutyl-ethanolamin, Ethylendiamin, Hexamethylendiamin, Morpholin, Piperidin, Pyridin, Imidazol und Triazine.

Die vorliegende Erfindung betrifft für die Vertragsstaaten DE, FR und GB einen Katholyten für die coulometrische Wasserbestimmung nach Karl Fischer, bestehend aus einer Lösung eines oder mehrerer Salze aus organischer Stickstoffbase und Säure in einem halogen freien Lösungsmittel, so daß, wenn Strom fließt, kein Schwefeldioxid aus dem Katholyten zu niederen Schwefelverbindungen reduziert wird, und wobei die Stickstoffbare ausgewählt wird aus der Gruppe bestehend aus Methylamin, Diethylamin, Propylamin, Octylamin, Trimethylamin, Dimethyldodecylamin, Cyclohexylamin, Di-Cyclohexylamin, Aminoethanol, Diethanolamin, Triethanolamin, N,N-Dibutylethanolamin, Ethylendiamin, Hexamethylendiamin, Morpholin, Piperidin, Pyridin, Imidazol und Triazine, und wobei das Salz Diethylaminhydrochlorid ausgeschlossen ist.

Für alle Vertragsstaaten kommen als Säuren, die mit den genannten organischen Stickstoffbasen anspruchsgemäße Salze bilden, sowohl organische, als auch anorganische Säuren in Frage.

Bevorzugte Säuren sind beispielsweise Chlorwasserstoffsäure, Bromwasserstoffsäure, Iodwasserstoffsäure, Schwefelsäure, Methylschwefelsäure, o-Phosphorsäure, Benzoesäure, Salicylsäure, Propionsäure und Decylcarbonsäure.

Als Lösungsmittel der anspruchsgemäßen Salze sind insbesondere Methanol und 1-Propanol bevorzugt. Aber auch andere halogenfreie Lösungsmittel, wie beispielsweise 2-Methoxyethanol können verwendet werden.

Die Konzentration der anspruchsgemäßen Salze in den erfindungsgemäßen Katholyten beträgt bevorzugt 0,1 - 10 Mol/l, besonders bevorzugt 1 - 5 Mol/l.

Die erfindungsgemäßen Katholyten können ein oder mehrere Salze enthalten. In letzterem Falle sind die Mischungsverhältnisse der Salze völlig unkritisch und können beliebig variiert werden.

Es ist möglich, die erfindungsgemäßen Katholyten vor Gebrauch mit konventioneller Karl-Fischer-Titrier-Lösung zu entwässern oder die Komponenten der konventionellen Karl-Fischer-Lösung auf Basis Schwefeldioxid direkt mit zuzusetzen.

Die erfindungsgemäßen Katholyten werden in den Kathodenraum des Karl-Fischer-Coulometers gefüllt, wahrend in den Anodenraum ein konventioneller Anolyt eingefügt wird Unter konventionellem Anolyt wird dabei eine Lösung verstanden, die Base. Schwefeldioxid und Jodid enthalt, wie z. B die Lösung gemäß Beispiel 8.

Während der Wasserbestimmung (d h. während der Elektrolyse) wird mit dem erfindungsgemäßen Katholyt an der Kathode nur Wasserstoff entwickelt, der aus der Zelle entweicht. Er kann weder in den Anodenraum gelangen, noch ist er unter den Bedingungen der Karl-Fischer-Titration durch Iod oxidierbar. Dadurch ist eine Störung der Karl-Fischer-Titration ausgeschlossen.

Eine besondere Form der Karl-Fischer-Coulometrie stellt die diaphragmalose Zelle dar, in der nur eine Kammer vorhanden ist, so daß die Kathoden- und die Anodenreaktion in der gleichen Reagenzlosung ablaufen (E Scholz. Laborpraxis 13, 526-531 (1989)). Für diesen Zweck kann der erfindungsgemäße Katholyt mit einem konventionellen Anolyten wie oben definiert gemischt werden. Das Mischungsverhältnis kann dabei in breiten Grenzen schwanken, wobei einerseits eine Mindestkonzentration von 0,2 mol/l Schwefeldioxid und andererseits eine Mindestkonzentration von 0,1 mol/l des anspruchsgemaßen Salzes erforderlich ist.

Beispiel 1

Katholyt aus 30.8 g Diethylamin-hydrobromid (0.2 mol) in 100 ml Methanol.

Beispiel 2

283 g Diethanolamin hydrochlorid (2 mol) in Methanol zu einem Gesamtvolumen von 1 l gelöst.

Beispiel 3

Katholyt aus 64,8 g Diethanolamin-methylsulfat (0,3 mol) und 139 g Diethanolamin-hydroiodid (0,6 mol in 1 l Methanol).

Beispiel 4

Katholyt aus 22.1 g Cyclohexylamin-benzoat (0,1 mol) in 100 ml Methanol.

Beispiel 5

Katholyt aus 156 g N,N-Dibutyl-ethanolaminsalicylat (0,5 mol) in 1 l 1-Propanol.

Beispiel 6

123 g Morpholinhydrochlorid werden in 1 l Methanol gelöst. Dann werden 14 g Imidazol (0,2 mol) zugesetzt und 6,4 g Schweleldioxid (0.1 mol) in die Losung eingeleitet. Dann wird unter Rühren festes lod zugesetzt, bis es nicht mehr vollständig reduziert wird Auf diese Weise wird der Katholyt getrocknet.

Beispiel 7

Katholyt aus 167 g Triazindihydroiodid (0,5 mol) in 1 l Methanol.

Beispiel 8

231 g Pyridinhydrochlorid (2 mol) werden in 1 l Methanol gelöst. Diese Lösung wird mit 1 l eines konventionellen Reagenzes vermischt, das aus 1,8 mol/l Pyridin, 1 mol/l Schwefeldioxid, 0,05 mol/l Pyridinhydrojodid und Methanol als Lösungsmittel besteht. Diese Mischung ist sowohl als Katholyt in der Karl-Fischer-Zelle mit Diaphragma als auch als Einkomponenten-Reagenz in der diaphragmalosen Zelle geeignet

Anwendungsbeispiel

In den Anodenraum eines kommerziell erhältlichen Karl-Fischer-Coulometer (Coulometer der Firma Kyoto Electronic, Japan, Modell MKC 210) wurden 100 ml eines konventionellen coulometrischen Reagenz, bestehend aus 1,3 mol/l Diethanolamin, 1,0 mol/l Schwefeldioxid, 0,1 mol/l Iodid und Methanol als Lösungsmittel eingefüllt. In den Kathodenraum wurden 5 ml des Katholyten aus Beispiel 2 eingefüllt. Es wurden nacheinander zu der gleichen Lösung viermal je 25 mg Wasser zugesetzt und analysiert. Es wurden die Werte

25 08 mg
24,92 mg
25,14 mg und
25,11 mg

gefunden.

Vergleichsbeispiel

Die Messungen des Anwendungsbeispiels wurden wiederholt mit dem Unterschied, daß der Kathodenraum dasselbe konventionelle coulometrische Reagenz wie der Anodenraum enthält. Folgende Werte wurden erhalten:

24,82 mg
25,57 mg
26.25 mg
25.56 mg.

## Patentansprüche

### Patentansprüche für folgende Vertragsstaaten : AT, BE, CH, DK, GR, IT, LI, NL, PT, SE

1. Katholyt für die coulometrische Wasserbestimmung nach Karl Fischer, **dadurch gekennzeichnet, daß** er aus einer Lösung eines oder mehrerer Salze aus organischer Stickstoffbase und Säure in einem halogenfreien Lösungsmittel besteht, so daß, wenn Strom fließt, kein Schwefeldioxid aus dem Katholyten zu niederen Schwefelverbindungen reduziert wird

2. Katholyt gemäß Anspruch 1, **dadurch gekennzeichnet, daß** als organische Stickstoffbase primäre, sekundäre oder tertiäre aliphatische Amine mit 1 bis 12 Kohlenstoffatomen pro Alkylgruppe, wobei die Alkylgruppen auch durch eine Hydroxy-Gruppe substituiert sein können;
primäre, sekundäre oder tertiäre cycloaliphatische Amine mit 3 bis 8 Kohlenstoffatomen pro Cycloalkylgruppe,
Alkylendiamine mit 1 bis 8 Kohlenstoffatomen; cyclische Amine mit 3 bis 8 Ringgliedern, oder aromatische Amine mit 5 oder 6 Ringgliedern eingesetzt werden.

3. Katholyt nach Anspruch 1 oder 2, **dadurch gekennzeichnet, daß** als organische Stickstoffbasen Methylamin, Diethylamin, Propylamin, Octylamin, Trimethylamin, Dimethyldodecylamin, Cyclohexylamin, Di-Cyclohexylamin, Aminoethanol, Diethanolamin, Triethanolamin, N,N-Dibutylethanolamin, Ethylendiamin, Hexamethylendiamin, Morpholin, Piperidin. Pyridin, Imidazol oder Triazine eingesetzt werden.

4. Katholyt nach mindestens einem der Ansprüche 1 bis 3, **dadurch gekennzeichnet, daß** als Säure Chlorwasserstoffsäure, Bromwasserstoffsäure, Iodwasserstoffsäure, Schwefelsäure, Methylschwefelsäure, o-Phosphorsäure, Benzoesäure, Salicylsäure, Propionsäure und Decylcarbonsäure eingesetzt werden.

5. Katholyt nach mindestens einem der Ansprüche 1 bis 4, **dadurch gekennzeichnet, daß** er als Lösungsmittel Methanol oder 1-Propanol enthält.

6. Katholyt nach mindestens einem der Ansprüche 1 bis 5, **dadurch gekennzeichnet, daß** er mit konventioneller Karl-Fischer-Lösung entwässert ist.

7. Verwendung eines Katholyten gemäß mindestens einem der Ansprüche 1 bis 6 zur coulometrischen Wasserbestimmung nach Karl Fischer

**Patentansprüche für folgenden Vertragsstaat : ES**

1. Verfahren zur Herstellung eines Katholyten für die coulometrische Wasserbestimmung nach Karl Fischer, **dadurch gekennzeichnet, daß** er aus einer Lösung eines oder mehrerer Salze aus organischer Stickstoffbase und Säure in einem halogenfreien Lösungsmittel besteht, so daß wenn Strom fließt, kein Schwefeldioxid aus dem Katholyten zu niederen Schwefelverbindungen reduziert wird.

2. Verfahren zur Herstellung eines Kathoden gemäß Anspruch 1, **dadurch gekennzeichnet, daß** als organische Stickstoffbase primare, sekundäre oder tertiare aliphatische Amine mit 1 bis 12 Kohlenstoffatomen pro Alkylgruppe. wobei die Alkylgruppen auch durch eine Hydroxy-Gruppe substituiert sein können.
   primare, sekundäre oder tertiare cycloaliphatische Amine mit 3 bis 8 Kohlenstoffatomen pro Cycloalkylgruppe
   Alkylendiamine mit 1 bis 8 Kohlenstoffatomen; cyclische Amine mit 3 bis 8 Binggliedern; oder aromatische Amine mit 5 oder 6 Ringgliedern eingesetzt werden

3. Verfahren zur Herstellung eines Katholyten nach Anspruch 1 oder 2, **dadurch gekennzeichnet, daß** als organische Stickstoffbasen Methylamin, Diethylamin, Propylamin, Octylamin, Trimethylamin. Dimethyldodecylamin, Cyclohexylamin, Di-Cyclohexylamin, Aminoethanol, Diethanolamin, Triethanolamin, N,N-Dibutylethanolamin, Ethylendiamin, Hexamethylendiamin, Morpholin, Piperidin, Pyridin. Imidazol oder Triazine eingesetzt werden.

4. Verfahren zur Herstellung eines Katholyten nach mindestens einem der Ansprüche 1 bis 3, **dadurch gekennzeichnet, daß** als Saure Chlorwasserstoffsäure, Bromwasserstoffsäure, Iodwasserstoffsäure, Schwefelsäure, Methylschwefelsäure, o-Phosphorsäure, Benzoesäure, Salicylsäure, Propionsäure und Decyclcarbonsäure eingesetzt werden.

5. Verfahren zur Herstellung eines Katholyten nach mindestens einem der Ansprüche 1 bis 4, **dadurch gekennzeichnet, daß** er als Lösungsmittel Methanol oder 1-Propanol enthält.

6. Verfahren zur Herstellung eines Katholyten nach mindestens einem der Ansprüche 1 bis 5, **dadurch gekennzeichnet, daß** er mit konventioneller Karl-Fischer-Lösung entwässert ist.

7. Verwendung eines Katholyten gemäß mindestens einem der Ansprüche 1 bis 6 zur coulometrischen Wasserbestimmung nach Karl Fischer.

**Patentansprüche für folgende Vertragsstaaten : DE, FR, GB**

1. Katholyt für die coulometrische Wasserbestimmung nach Karl Fischer, bestehend aus einer Lösung eines oder mehrerer Salze aus organischer Stickstoffbase und Säure in einem halogenfreien Lösungsmittel, so daß, wenn Strom fließt, kein Schwefeldioxid aus dem Katholyten zu niederen Schwefelverbindungen reduziert wird, und wobei die Stickstoffbase ausgewählt wird aus der Gruppe bestehend aus Methylamin, Diethylamin, Propylamin. Octylamin, Trimethylamin, Dimethyldodecylamin, Cyclohexylamin, Di-Cyclohexylamin, Aminoethanol, Diethanolamin, Triethanolamin, N,N-Dibutylethanolamin, Ethylendiamin, Hexamethylendiamin, Morpholin, Piperidin, Pyridin, Imidazol und Triazine, und wobei das Salz Diethylaminhydrochlorid ausgeschlossen ist.

2. Katholyt gemäß Anspruch 1, **dadurch gekennzeichnet, daß** als Säure Chlorwasserstoffsäure, Bromwasserstoffsäure, Iodwasserstoffsäure, Schwefelsäure, Methylschwefelsäure, o-Phosphorsäure, Benzoesäure, Salicylsäure, Propionsäure und Decylcarbonsäure eingesetzt werden.

3. Katholyt nach Anspruch 1 oder 2, **dadurch gekennzeichnet, daß** er als Lösungsmittel Methanol oder 1-Propanol enthält.

4. Verwendung eines Katholyten gemäß mindestens einem der Ansprüche 1 bis 3 zur coulometrischen Wasserbestimmung nach Karl Fischer.

**Claims**

**Claims for the following Contracting States : AT, BE, CH, DK, GR, IT, LI, NL, PT, SE**

1. Catholyte for coulometric water determination according to Karl Fischer, **characterized in that** it consists of a solution of one or more salts of organic nitrogen base and acid in a halogen-free solvent, wherein, when under current, no sulphur dioxide of the catholyte is reduced to lower sulphur compounds.

2. Catholyte according to claim 1, **characterized in that** as the organic nitrogen base primary, secondary or tertiary aliphatic amines having 1 to 12 carbon atoms per alkyl group, wherein the alkyl groups may also be substituted by a hydroxy group;
   primary, secondary or tertiary cycloaliphatic amines having 3 to 8 carbon atoms per cycloalcyl group;

alkylene diamines having 1 to 8 carbon atoms; cyclic amines having 3 to 8 ring members; or aromatic amine having 5 or 6 ring members are used.

3. Catholyte according to claim 1 or 2, **characterized in that** as the organic nitrogen bases methylamine, diethylamine, propylamine, octylamine. trimethylamine, dimethyldodecylamine, cyclohexylamine, di-cyclohexylamine aminoethanole. diethanolamine, triethanolamine, N,N-dibutylethanolamine, ethylenediamine, hexamethylendiamine, morpholine, piperidine, pyridine, imidazole of triazine are used.

4. Catholyte according to at least one of claims 1 to 3, **characterized in that** as the acid hydrochloric acid, hydrobromic acid, hydriodic acid, sulphuric acid, methylsulphuric acid, o-phosphoric acid, benzoic acid, salicylic acid propionic acid and decylcarbon acid are used.

5. Catholyte according to at least one of claims 1 to 4, **characterized in that** it comprises methanol or 1-propanol as a solvent.

6. Catholyte according to at least one of claims 1 to 5, **characterized in that** it is desiccated by conventional Karl-Fischer solution.

7. Use of a catholyte according to at least one of claims 1 to 6 for the coulometric water determination according to Karl Fischer.


**Claims for the following Contracting State : ES**

1. Process for the preparation of a catholyte for coulometric water determination according to Karl Fischer, **characterized in that** it consists of a solution of one or more salts of organic nitrogen base and acid in a halogen-free solvent. wherein, when under current, no sulphur dioxide of the catholyte is reduced to lower sulphur compounds

2. Process for the preparation of a catholyte according to claim 1, **characterized in that** as the organic nitrogen base primary secondary or tertiary aliphatic amines having 1 to 12 carbon atoms per alkyl group. wherein the alkyl groups may also be substituted by a hydroxy group;
    primary secondary or tertiary cycloaliphatic amines having 3 to 8 carbon atoms per cycloalcyl group:
    alkylene diamines having 1 to 8 carbon atoms, cyclic amines having 3 to 8 ring members; or aromatic amine having 5 or 6 ring members are used.

3. Process for the preparation of a catholyte according to claim 1 or 2, **characterized in that** as the organic nitrogen bases methylamine, diethylamine, propylamine, octylamine, trimethylamine, dimethyldodecylamine cyclohexylamine di-cyclohexylamine, aminoethanole, diethanolamine, triethanolamine, N. N-dibutylethanolamine, ethylenediamine, hexamethylendiamine, morpholine, piperidine, pyridine, imidazole or triazine are used.

4. Process for the preparation of a catholyte according to at least one of claims 1 to 3, **characterized in that** as the acid hydrochloric acid, hydrobromic acid, hydriodic acid, sulphuric acid, methylsulphuric acid, o-phosphoric acid, benzoic acid salicylic acid, propionic acid and decylcarbon acid are used.

5. Process for the preparation of a catholyte according to at least one of claims 1 to 4, **characterized in that** it comprises methanol or 1-propanol as a solvent.

6. Process for the preparation of a catholyte according to at least one of claims 1 to 5, **characterized in that** it is desiccated by conventional Karl-Fischer solution.

7. Use of a catholyte as prepared by a process according to at least one of claims 1 to 6 for the coulometric water determination according to Karl Fischer


**Claims for the following Contracting States : DE, FR, GB**

1. Catholyte for coulometric water determination according to Karl Fischer, consisting of a solution of one or more salts of organic nitrogen base and acid in a halogen-free solvent, wherein, when under current, no sulphur dioxide of the catholyte is reduced to lower sulphur compounds and wherein the nitrogen base is chosen from a group consisting of methylamine, diethylamine, pro-propylamine, octylamine, trimethylamine, dimethyldodecylamine, cyclohexylamine, di-cyclohexylamine, aminoethanole, diethanolamine, triethanolamine, N,N-dibutylethanolamine, ethylenediamine, hexamethylendiamine, morpholine, piperidine, pyridine, imidazole and trazine, excluding the salt diethylamine hydrochloride.

2. Catholyte according to claim 1, **characterized in that** as the acid hydrochloric acid, hydrobromic acid, hydroiodic acid, sulphuric acid, methylsulphuric acid, o-phosphoric acid, benzoic acid, salicylic acid, propionic acid and decylcarbon acid are used.

3. Catholyte according to at least one of claims 1 to 2, **characterized in that** it comprises methanol or 1-propanol as a solvent.

4. Use of a catholyte according to at least one of claims 1 to 3 for the coulometric water determination according to Karl Fischer.

**Revendications**

**Revendications pour les Etats contractants suivants : AT, BE, CH, DK, GR, IT, LI, NL, PT, SE**

1. Catholyte pour le dosage coulométrique de l'eau selon Karl Fischer, **caractérisé en ce qu'**il est constitué d'une solution d'un ou plusieurs sels d'une base azotée organique et d'un acide dans un solvant non halogéné, de façon que. en présence d'un courant, il n'y ait pas de dioxyde de soufre provenant du catholyte, qui soit réduit en des composés du soufre inférieurs.

2. Catholyte selon la revendication 1, **caractérisé en ce que** l'on utilise en tant que base azotée organique des amines aliphatiques primaires, secondaires ou tertiaires ayant de 1 à 12 atomes de carbone par groupe alkyle, les groupes alkyle pouvant aussi être substitués par un groupe hydroxy ; des amines cycloaliphatiques primaires, secondaires ou tertiaires, ayant de 3 à 8 atomes de carbone par groupe cycloalkyle ; des alkylènediamines ayant de 1 à 8 atomes de carbone ; des amines cycliques ayant de 3 à 8 termes cycliques ; ou encore des amines aromatiques ayant 5 ou 6 termes cycliques.

3. Catholyte selon la revendication 1 ou 2, **caractérisé en ce qu'**on utilise en tant que bases azotées organiques ia méthylamine, la diéthylamine, la propylamine, l'octylamine, la triméthylamine, la diméthyldodécylamine, la cyclohexylamine, la dicyclohexylamine, l'aminoéthanol, la diéthanolamine, la triéthanolamine, la N,N-dibutyléthanolamine, l'éthylènediamine, l'hexaméthylènediamine, la morpholine, la pipéridine, la pyridine, l'imidazole ou les triazines.

4. Catholyte selon au moins l'une des revendications 1 à 3 **caractérisé en ce qu'**on utilise en tant qu'acide l'acide chlorhydrique, l'acide bromhydrique, l'acide iodhydrique, l'acide sulfurique, l'acide méthylsulfurique, l'acide orthophosphorique, l'acide benzoïque, l'acide salicylique, l'acide propionique et l'acide décylcarboxylique.

5. Catholyte selon au moins l'une des revendications 1 à 4, **caractérisé en ce qu'**il contient en tant que solvant du méthanol ou du 1-propanol.

6. Catholyte selon au moins l'une des revendications 1 à 5, **caractérisé en ce qu'**il est déshydraté par une solution classique de Karl Fischer.

7. Utilisation d'un catholyte selon au moins l'une des revendications 1 à 6 pour le dosage coulométrique de l'eau selon Karl Ficher

**Revendications pour l'Etat contractant suivant : ES**

1. Procédé pour préparer un catholyte pour le dosage coulométrique de l'eau selon Karl Fischer, **caractérisé en ce qu'**il est constitué d'une solution d'un ou plusieurs sels d'une base azotée organique et d'un acide dans un solvant non halogéné, de façon que, en présence d'un courant, il n'y ait pas de dioxyde de soufre provenant du cathode, qui soit réduit en des composés du soufre inférieurs

2. Procédé pour préparer un catholyte selon la revendication 1, **caractérisé en ce que** l'on utilise en tant que base azotée organique des amines aliphatiques primaires, secondaires ou tertiaires ayant de 1 à 12 atomes de carbone par groupe alkyle, les groupes alkyfe pouvant aussi être substitués par un groupe hydroxy, des amines cycloaliphatiques primaires, secondaires ou tertiaires, ayant de 3 à 8 atomes de carbone par groupe cycloalkyle; des alkylènediamines ayant de 1 à 8 atomes de carbone ; des amines cycliques ayant de 3 à 8 termes cycliques ; ou encore des amines aromatiques ayant 5 ou 6 termes cycliques.

3. Procédé pour préparer un catholyte selon la revendication 1 ou 2, **caractérisé en ce qu'**on utilise en tant que bases azotées organiques la méthylamine, la diéthylamine, la propylamine, l'octylamine, la triméthylamine, la diméthyldodécylamine, la cyclohexylamine, la dicyclohexylamine, l'aminoéthanol, la diéthanolamine, la triéthanolamine, la N,N-dibutyléthanolamine, l'éthylènediamine, l'hexaméthylènediamine. la morpholine, la pipéridine la pyridine. imidazole ou les triazines.

4. Procédé pour préparer un catholyte selon au moins l'une des revendications 1 à 3, **caractérisé en ce qu'**on utilise en tant qu'acide l'acide chlorhydrique, l'acide bromhydrique, l'acide iodhydrique, l'acide sulfurique, l'acide méthylsulfurique, l'acide orthophosphorique, l'acide benzoïque, l'acide salicylique, l'acide propionique et l'acide décylcarboxylique.

5. Procédé pour préparer un catholyte selon au moins l'une des revendications 1 à 4, **caractérisé en ce qu'**il contient en tant que solvant du méthanol ou du 1-propanol.

**6.** Procédé pour préparer un catholyte selon au moins l'une des revendications 1 à 5, **caractérisé en ce qu'**il est déshydraté par une solution classique de Karl Fischer.

**7.** Utilisation d'un catholyte selon au moins l'une des revendications 1 à 6, pour le dosage coulométrique de l'eau selon Karl Fischer.

**Revendications pour les Etats contractants suivants : DE, FR, GB**

**1.** Catholyte pour le dosage coulométrique de l'eau selon Karl Fischer, constitué d'une solution d'un ou plusieurs sels obtenus à partir d'une base azotée organique et d'un acide dans un solvant non halogéné de telle sorte que, lors du passage du courant, il n'y ait pas réduction de dioxyde de soufre, provenant du catholyte, en des composés inférieurs du soufre, et la base azotée étant choisie dans l'ensemble comprenant la méthylamine, la diéthylamine, la propylamine, l'octylamine, la triméthylamine, la diméthyldodécylamine, la cyclohexylamine, la dicyclohexylamine, l'aminoéthanol, la diéthanolamine, la triéthanolamine, la N,N-dibutyléthanolamine, l'éthylènediamine, l'hexaméthylènediamine, la morpholine, la pipéridine, la pyridine, l'imidazole ou la triazine, à l'exclusion du sel chlorhydrate de diéthylamine.

**2.** Catholyte selon la revendication 1, **caractérisé en ce qu'**on utilise en tant qu'acide l'acide chlorhydrique, l'acide bromhydrique, l'acide iodhydrique, l'acide sulfurique, l'acide méthylsulfurique, l'acide orthophosphorique, l'acide benzoïque, l'acide salicylique, l'acide propionique et l'acide décylcarboxylique.

**3.** Catholyte selon la revendication 1 ou 2, **caractérisé en ce qu'**il contient en tant que solvant du méthanol ou du 1-propanol.

**4.** Utilisation d'un catholyte selon au moins l'une des revendications 1 à 3 pour le dosage coulométrique de l'eau selon Karl Fischer.